# EUROPEAN PATENT SPECIFICATION

(11) **EP 4 242 136 B1**
(45) Date of publication and mention of the grant of the patent: **15.10.2025**
(21) Application number: 21894734.9
(22) Date of filing: 18.11.2021
(51) Int. Cl.: B65G 1/04, B65G 1/06

(54) **ARTICLE STORAGE FACILITY**
LAGEREINRICHTUNG FÜR ARTIKEL
INSTALLATION DE STOCKAGE D'ARTICLES

(30) Priority: 18.11.2020 JP 2020191703
(43) Date of publication of application: 13.09.2023
(73) Proprietor: Daifuku Co., Ltd., Osaka 555-0012 (JP)
(72) Inventor: UEDA Yuichi, Gamo-gun, Shiga 529-1692 (JP); IWATA Masashige, Gamo-gun, Shiga 529-1692 (JP)
(74) Representative: Grosse, Felix Christopher
(86) International application number: PCT/JP2021/042493
(87) International publication number: WO 2022/107862

(56) References cited:
- WO-A1-2012/011219
- JP-A- 2011 178 549
- JP-A- 2019 123 573

## Description

The present invention relates to an article storage facility equipped with a first multilevel rack, which includes a plurality of first shelves on a plurality of levels such that the first shelves on each level are disposed along a first direction across a horizontal plane, and a second multilevel rack, which includes a plurality of second shelves on a plurality of levels such that the second shelves on each level are disposed along the first direction and are closer to one side in the first direction than the first multilevel rack.

The background art is described below. In the following description, symbols or names given in parentheses are the symbols or names used in the cited background art document.

JP 2011 178 549 A describes an article storage facility. As one example, in Fig. 1 of JP 2011 178 549 A, an article storage facility is equipped with a first multilevel rack (12L1), which includes shelves (22) on a plurality of levels such that the shelves (22) on each level are disposed along a first direction across a horizontal plane, and a second multilevel rack (12L2) which includes shelves (22) on a plurality of levels such that the shelves (22) on each level are disposed along the first direction and are closer to one side in the first direction than the first multilevel rack (12L1). A first standby station (24L1) is provided adjacent to a second multilevel rack (12L2) side-end of the first multilevel rack (12L1) and a second standby station (24L2) is provided adjacent to a first multilevel rack (12L1) side-end of the second multilevel rack (12L2). In addition, a raising and lowering apparatus (16) is provided between the first standby station (24L1) and the second standby station (24L2) in the first direction. That is, the first standby station (24L1) is provided between the first multilevel rack (12L1) and the raising and lowering apparatus (16), and the second standby station (24L2) is provided between the second multilevel rack (12L2) and the raising and lowering apparatus (16).

This single raising and lowering apparatus (16) operates to load articles onto and unload articles from the first multilevel rack (12L1) and the second multilevel rack (12L2).

In the article storage facility described in JP 2011 178 549 A, a single raising and lowering apparatus (16) operates to load articles onto and unload articles from the first multilevel rack (12L1) and the second multilevel rack (12L2) and transfers articles between the first standby station (24L1) and the second standby station (24L2). However, there is a limit on the number of articles that can be transferred by one raising and lowering apparatus (16) within a predetermined time. This means that when the shelves (22) are provided on many levels in the first multilevel rack (12L1) and the second multilevel rack (12L2) and/or when the number of articles to be loaded and unloaded is large, it has been difficult to load and unload articles efficiently.

In view of the situation described above, there is demand for an article storage facility that can efficiently load articles onto and unload articles from a plurality of multilevel racks.

In view of the above, a characteristic configuration of an article storage facility includes: a first multilevel rack including first shelves on a plurality of levels, with the first shelves on the respective levels being disposed along a first direction across a horizontal plane; a second multilevel rack including second shelves on a plurality of levels, with the second shelves on the respective levels being disposed along the first direction and closer to one side in the first direction than the first multilevel rack; a standby station disposed between the first multilevel rack and the second multilevel rack in the first direction and including standby conveyors on a number of levels that is at least equal to whichever of the first shelves and the second shelves has a lower number of levels; a plurality of transfer shuttles disposed for respective levels of the standby conveyors or disposed for the standby conveyors on a plurality of levels, and configured to travel along the first direction and to transfer articles between the standby conveyors and the first shelves and the second shelves; a first raising and lowering apparatus including a first raising and lowering conveyor, disposed between the first multilevel rack and the standby station in the first direction and configured to transfer the articles to and from the standby conveyors, and a first raising and lowering mechanism configured to raise and lower the first raising and lowering conveyor between every level of the standby conveyors; and a second raising and lowering apparatus including a second raising and lowering conveyor, disposed between the second multilevel rack and the standby station in the first direction and configured to transfer the articles to and from the standby conveyors, and a second raising and lowering mechanism configured to raise and lower the second raising and lowering conveyor between every level of the standby conveyors.

With the characteristic configuration described above, it is possible for both the first raising and lowering conveyor of the first raising and lowering apparatus and the second raising and lowering conveyor of the second raising and lowering apparatus to transfer articles to and from the different levels of the standby station. That is, two raising and lowering apparatuses are provided for one standby station, raising and lowering of articles can be performed independently by the two raising and lowering apparatuses, and the two raising and lowering apparatuses can independently transfer articles to and from the standby conveyors on the respective levels of the standby station. This means that it is possible to increase the efficiency when raising and lowering articles. Accordingly, an article storage facility that can efficiently load and unload articles to and from a plurality of multilevel racks is realized.

These and other advantages and features of the technology according to the present invention will become more apparent from the following description of the embodiments, which refer to the accompanying drawings and are exemplary and non-limiting.
- Fig. 1: is a side view of an article storage facility according to a first embodiment;
- Fig. 2: is a top view of the article storage facility according to the first embodiment;
- Fig. 3: is a side view of an article storage facility according to a second embodiment;
- Fig. 4: is a top view of an article storage facility according to a third embodiment;
- Fig. 5: is a side view of a standby conveyor of an article storage facility according to a fourth embodiment;
- Fig. 6: is a side view of a standby conveyor of an article storage facility according to a fifth embodiment;
- Fig. 7: is a top view of an article storage facility according to a sixth embodiment;
- Fig. 8: is a side view of the article storage facility according to the sixth embodiment;
- Fig. 9: is a side view of the article storage facility according to the sixth embodiment;
- Fig. 10: is a top view of an article storage facility according to another embodiment; and
- Fig. 11: is a side view of an article storage facility according to another embodiment.

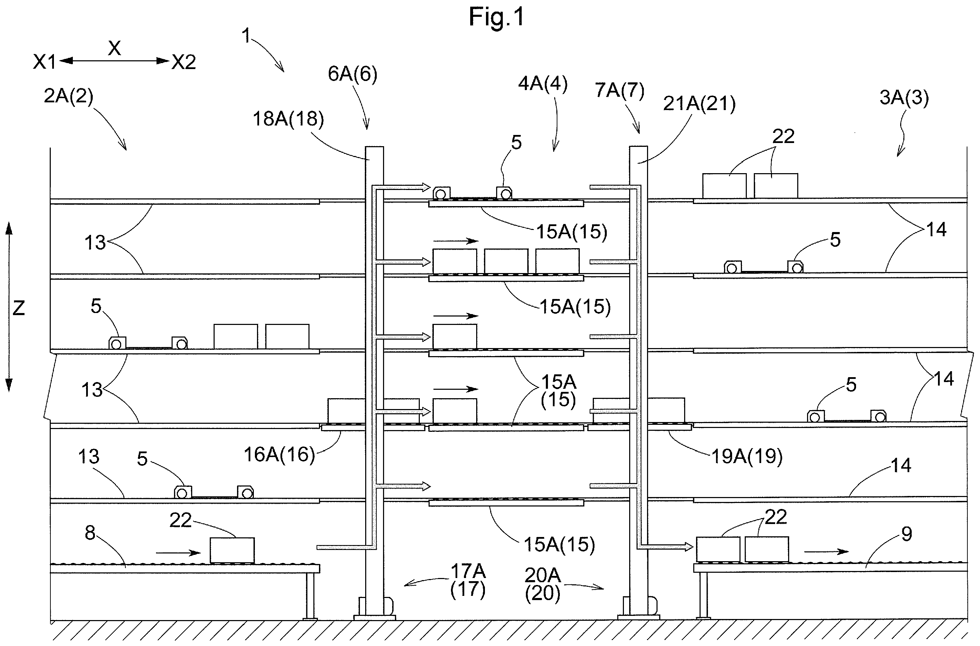

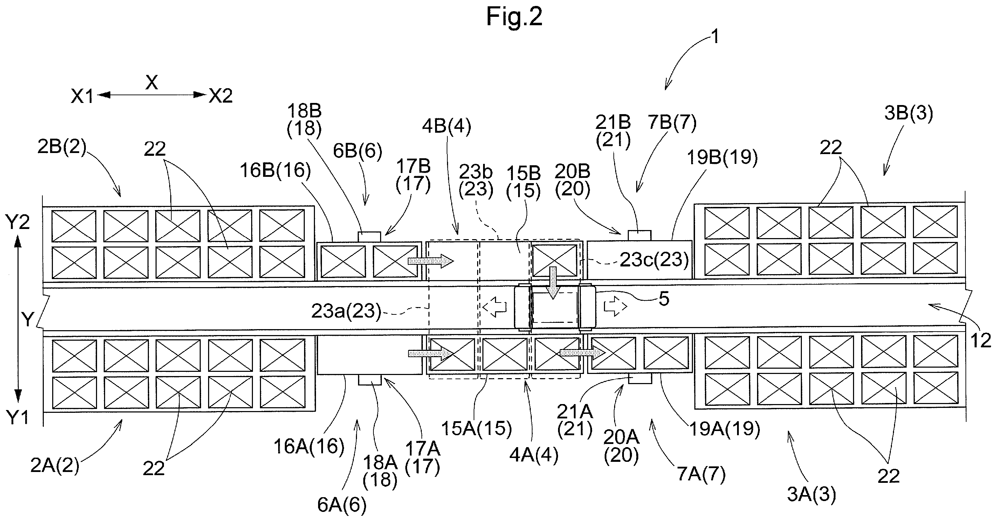

A first embodiment of an article storage facility 1 will now be described with reference to the drawings. As depicted in Figs. 1 and 2, the article storage facility 1 is equipped with first multilevel racks 2 (that is, 2A and 2B), second multilevel racks 3 (that is, 3A and 3B), standby stations 4 (that is, 4A and 4B), transfer shuttles 5, first raising and lowering apparatuses 6 (that is, 6A and 6B), and second raising and lowering apparatuses 7 (that is, 7A and 7B). The article storage facility 1 according to the first embodiment is further equipped with a loading conveyor 8 and an unloading conveyor 9. In the following description, one side in a "first direction X" indicated in the drawings is referred to as the "first direction-first side X1" and the opposite side is referred to as the "first direction-second side X2". A direction that is perpendicular to the first direction X when looking from above or below along a vertical direction Z is set as a "second direction Y", a first side in the second direction Y is referred to as the "second direction-first side Y1", and the opposite side is referred to as the "second direction-second side Y2". The direction of travel of the transfer shuttles 5 is along the first direction X. The second direction Y is also the depth direction of the shelves in the first multilevel racks 2 and the second multilevel racks 3.

In the present embodiment, a direction that is perpendicular to the first direction X when looking from above or below in the vertical direction Z is set as the "second direction Y". The first multilevel racks 2, the second multilevel racks 3, the standby stations 4, the first raising and lowering apparatuses 6, and the second raising and lowering apparatuses 7 are installed in pairs that face each other in the second direction Y with travel paths 12 of the transfer shuttles 5 in between. In the present embodiment, the first multilevel rack 2A, the first raising and lowering apparatus 6A, standby conveyors 15A, the second raising and lowering apparatus 7A, and the second multilevel rack 3A are provided on the second direction-first side Y1 (that is, at the front in the depth direction of Fig. 1). Also, the first multilevel rack 2B, the first raising and lowering apparatus 6B, standby conveyors 15B, the second raising and lowering apparatus 7A, and the second multilevel rack 3B are provided at the second direction-second side Y2 (that is, at the back in the depth direction of Fig. 1). In the article storage facility 1, the respective numbers of the standby conveyors 15, first shelves 13, and second shelves 14 are equal to the number of levels. Fig. 1 illustrates the first multilevel rack 2A, the first raising and lowering apparatus 6A, the standby conveyors 15A, the second raising and lowering apparatus 7A and the second multilevel rack 3A that are on the second direction-first side Y1 (that is, at the front).

The first multilevel racks 2 (2A and 2B) each include the first shelves 13 on a plurality of levels, and the first shelves 13 of each level are disposed along the first direction X across a horizontal plane. The second multilevel racks 3 (3A and 3B) each include the second shelves 14 on a plurality of levels, and the second shelves 14 of each level are disposed along the first direction X closer to one side in the first direction (that is, the "first direction-second side X2") than the first multilevel racks 2.

The standby stations 4 (4A and 4B) are disposed between the first multilevel racks 2 and the second multilevel racks 3 in the first direction X, and include a number of standby conveyors 15 (15A and 15B) that is equal to or greater than whichever out of the first shelves 13 and the second shelves 14 has the smaller number of levels. In the present embodiment, since the first shelves 13 and the second shelves 14 have the same number of levels, the same number of standby conveyors 15 (15A and 15B) are provided. The standby conveyors 15 of the standby stations 4 include loading regions 23 (23a, 23b, and 23c) where a plurality of articles 22 can be loaded in a row in the first direction X and are capable of moving the loaded articles 22 along the first direction X (that is, toward a second side in the conveying direction (the first direction-second side X2) that is one side in the conveying direction along the first direction X). As one example, each standby conveyor 15 is constructed of a plurality of rotating bar-shaped rollers placed in alignment. Alternatively, each standby conveyor 15 is constructed of a belt conveyor.

At least one loading region out of the loading regions 23 (23a, 23b, and 23c) of a standby conveyor 15 is used as the location where the transfer shuttle 5 passes articles 22 to that standby conveyor 15. Also, at least one other loading region out of the loading regions 23 of a standby conveyor 15 is used as a location where the transfer shuttle 5 receives articles 22 from that standby conveyor 15. As one example, the loading region 23a that is closest to the first raising and lowering apparatus 6 out of the loading regions 23 is used as the location where the transfer shuttle 5 receives articles 22 from the standby conveyor 15. Also, the loading region 23c that is closest to the second raising and lowering apparatus 7 out of the loading regions 23 is used as the location where the transfer shuttle 5 transfers articles 22 to the standby conveyor 15.

The transfer shuttle 5 travels along the first direction X to transfer the articles 22 between the standby conveyors 15, the first shelves 13, and the second shelves 14. A separate transfer shuttle 5 is provided for each level of the standby conveyors 15 or one transfer shuttle 5 may be provided for a plurality of levels. In the present embodiment, a transfer shuttle 5 is provided for each level of the standby conveyors 15.

Each transfer shuttle 5 includes a carriage that travels on the travel path 12 along the first direction X, and a transferring apparatus that is supported on the carriage and transfers articles 22 along the second direction Y. As one example, when, in the first direction X, the side where the first shelves 13 are disposed relative to the second shelves 14 is expressed as the "first direction-first side X1" and the side where the second shelves 14 are disposed relative to the first shelves 13 is expressed as the "first direction-second side X2", each transfer shuttle 5 is constructed so as to be capable of traveling in the first direction X between the first direction-first side X1 end of the first shelves 13 and the first direction-second side X2 end of the second shelves 14.

As one example, the transferring apparatus of each transfer shuttle 5 includes a pair of arms that move in and out along the second direction Y. Each transfer shuttle 5 is capable of running along the travel path 12, stopping at a position along the second direction Y adjacent to any of a first shelf 13 of the first multilevel rack 2, a standby conveyor 15 or a second shelf 14 of the second multilevel rack 3, and using the arms or the like mentioned above to pass a conveyed article 22 to the first shelf 13, the standby conveyor 15, or the second shelf 14 and receive an article 22 that was loaded on the first shelf 13, the standby conveyor 15, or the second shelf 14. In this way, the transfer shuttles 5 are capable of transferring, or in other words moving, the articles 22 to and from each of the first shelves 13, the standby conveyors 15, and the second shelves 14.

The first raising and lowering apparatuses 6 (6A and 6B) each include a first raising and lowering conveyor 16 (16A or 16B), which is disposed between the first multilevel rack 2 and the standby station 4 in the first direction X and transfers articles 22 to and from a standby conveyor 15, and a first raising and lowering mechanism 17 (17A or 17B) which raises and lowers the first raising and lowering conveyor 16 between every level of the standby conveyors 15. Each first raising and lowering apparatus 6 also includes a first raising and lowering platform (not illustrated) that supports the first raising and lowering conveyor 16. Each first raising and lowering mechanism 17 (17A or 17B) is also equipped with a first mast 18 (18A or 18B) that guides the first raising and lowering conveyor 16 (16A or 16B) in the vertical direction Z. The first mast 18 is disposed at a position that does not coincide with the travel path 12 of the transfer shuttle 5 when looking from above or below in the vertical direction Z. Each first raising and lowering mechanism 17 raises and lowers the first raising and lowering platform and the first raising and lowering conveyor 16 along the first mast 18 in the vertical direction Z using a raising and lowering motor (not illustrated) or the like.

Each second raising and lowering apparatus 7 (7A or 7B) includes a second raising and lowering conveyor 19 (19A or 19B), which is disposed between the second multilevel rack 3 and the standby station 4 in the first direction X and transfers articles 22 to and from a standby conveyor 15, and a second raising and lowering mechanism 20 (20A or 20B) which raises and lowers the second raising and lowering conveyor 19 between every level of the standby conveyors 15. Each second raising and lowering apparatus 7 includes a second raising and lowering platform (not illustrated) that supports the second raising and lowering conveyor 19. Each second raising and lowering mechanism 20 (20A or 20B) is also equipped with a second mast 21 (21A or 21B) that guides the second raising and lowering conveyor 19 (19A or 19B) in the vertical direction Z. The second mast 21 is disposed at a position that does not coincide with the travel path 12 of the transfer shuttle 5 when looking from above or below in the vertical direction Z. The second raising and lowering mechanism 20 raises and lowers the second raising and lowering platform and the second raising and lowering conveyor 19 along the second mast 21 in the vertical direction Z using a raising and lowering motor (not illustrated) or the like.

As one example, the first raising and lowering conveyor 16 and the second raising and lowering conveyor 19 are each constructed of a plurality of rotating bar-shaped rollers placed in alignment and can convey articles 22 that have been loaded onto these rollers through rotation of the rollers. Alternatively, the first raising and lowering conveyor 16 and the second raising and lowering conveyor 19 are each constructed using a belt conveyor for example, and are capable of conveying articles 22 that have been loaded onto the belt conveyor by driving the belt conveyor.

The loading conveyor 8 conveys articles 22 that are to be loaded into the first multilevel rack 2 or the second multilevel rack 3. In the present embodiment, the loading conveyor 8 is disposed at a position that coincides with the first multilevel rack 2 when looking from above or below in the vertical direction Z. In the illustrated example, the loading conveyor 8 is disposed below the first multilevel rack 2 and coincides with the first multilevel rack 2 when looking from above or below. Note that although not illustrated in Figs. 1 and 2, the loading conveyor 8 is provided at positions that coincide with both the first multilevel rack 2A on the second direction-first side Y1 and the first multilevel rack 2B on the second direction-second side Y2.

The unloading conveyor 9 conveys articles 22 to be unloaded from the first multilevel rack 2 or the second multilevel rack 3. In the present embodiment, the unloading conveyor 9 is disposed at a position that coincides with the second multilevel rack 3 when looking from above or below. In the illustrated example, the unloading conveyor 9 is disposed at a position that is below the first multilevel rack 2 and coincides with the second multilevel rack 3 when looking from above or below. Note that although not illustrated in Figs. 1 and 2, the unloading conveyor 9 is provided at both a position that coincides with the second multilevel rack 3A on the second direction-first side Y1 and a position that coincides with the second multilevel rack 3B on the second direction-second side Y2.

As one example, the loading conveyor 8 and the unloading conveyor 9 can each be constructed by disposing a plurality of rotating bar-shaped rollers in alignment and can convey articles 22 that have been loaded onto the rollers by rotating the rollers. As an alternative example, the loading conveyor 8 and the unloading conveyor 9 can each be constructed using a belt conveyor and can convey articles 22 that have been loaded onto the belt conveyors by driving the belt conveyors.

The first raising and lowering mechanism 17 of a first raising and lowering apparatus 6 can move the first raising and lowering conveyor 16 to a position where that first raising and lowering conveyor 16 receives articles 22 from the loading conveyor 8. The second raising and lowering mechanism 20 of a second raising and lowering apparatus 7 can move the second raising and lowering conveyor 19 to a position where articles 22 are passed from that second raising and lowering conveyor 19 to the unloading conveyor 9.

In the present embodiment, the first raising and lowering apparatus 6 is used for loading the articles 22 and the second raising and lowering apparatus 7 is used for unloading the articles 22. That is, the first raising and lowering conveyor 16 of a first raising and lowering apparatus 6 conveys articles 22 received from the loading conveyor 8 toward the first direction-second side X2. The second raising and lowering conveyor 19 of a second raising and lowering apparatus 7 conveys articles 22 received from a standby conveyor 15 toward the first direction-second side X2.

Next, a process of loading articles 22 into the first multilevel rack 2 and the second multilevel rack 3 and a process of unloading articles 22 from the first multilevel rack 2 and the second multilevel rack 3 will be described.

As one example, a label on which optically readable information is written is provided on an outer surface of the articles 22 conveyed by the loading conveyor 8. Alternatively, the articles 22 conveyed by the loading conveyor 8 are provided with a storage medium storing information that can be read wirelessly or the like. By reading the information included in a label or a storage medium during conveying on the loading conveyor 8, a control apparatus of the article storage facility 1 decides on which shelf (that is, at which storage location) each article 22 is to be stored and transmits information relating to the storage location to a first raising and lowering apparatus 6, a standby conveyor 15, and a transfer shuttle 5. The first raising and lowering apparatus 6 then lowers (or raises) the first raising and lowering conveyor 16 and stops the first raising and lowering conveyor 16 at the same level (height) as the loading conveyor 8, where the first raising and lowering conveyor 16 receives articles 22 from the loading conveyor 8. Next, the control apparatus of the article storage facility 1 raises the first raising and lowering conveyor 16 and stops the raising and lowering conveyor 16 at the level (height) decided as the storage location and passes the articles 22 to the standby conveyor 15 that is adjacent at the same level (height). The transfer shuttle 5 receives an article 22 loaded onto one of the loading regions 23 (for example, the loading region 23a) of that standby conveyor 15, travels along the travel path 12, stops in front of a storage portion of the shelf determined as the storage destination in the first multilevel rack 2 or the second multilevel rack 3, and passes the conveyed article 22 to that shelf.

The control apparatus of the article storage facility 1 decides which article 22 stored at what storage portion of a shelf is to be unloaded from the unloading conveyor 9 (that is, the unloading site), and transmits information relating to that storage location to a transfer shuttle 5, a standby conveyor 15, and a second raising and lowering apparatus 7. The transfer shuttle 5 then stops in front of the storage portion of the shelf determined as the unloading site of the first multilevel rack 2 or the second multilevel rack 3 and receives the article 22 stored at that storage portion. The transfer shuttle 5 then runs along the travel path 12 and stops adjacent to one of the loading regions 23 (for example, the loading region 23c) of the standby conveyor 15 and passes the conveyed article 22 to that loading region 23c. The standby conveyor 15 conveys the loaded article 22 to the adjacent second raising and lowering conveyor 19. The second raising and lowering apparatus 7 lowers the second raising and lowering conveyor 19, stops the second raising and lowering conveyor 19 at the same level (height) as the unloading conveyor 9, and passes the article 22 to the unloading conveyor 9. The unloading conveyor 9 then unloads the article 22.

As described above, both the first raising and lowering conveyor 16 of the first raising and lowering apparatus 6 and the second raising and lowering conveyor 19 of the second raising and lowering apparatus 7 are capable of transferring articles 22 between the various levels of the standby station 4. In other words, two raising and lowering apparatuses are provided for the single standby station 4, each of these two raising and lowering apparatuses can independently raise and lower the articles 22, and each of these two raising and lowering apparatuses can independently transfer the articles 22 to and from the stand-by conveyors 15 on the respective levels of the standby station 4. As a result, it is possible to improve the efficiency of conveying that raises and lowers the articles 22. Accordingly, an article storage facility 1 capable of efficiently loading and unloading articles 22 onto and from a plurality of multilevel racks is realized.

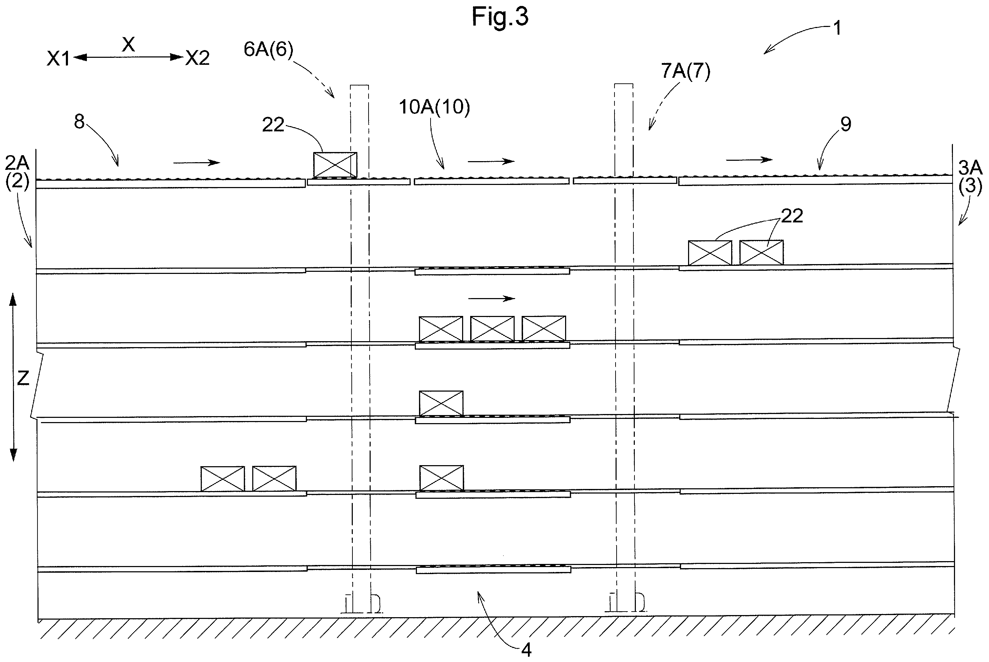

Next, a second embodiment of an article storage facility 1 will be described with reference to Fig. 3. The present embodiment differs from the embodiment described above in that the article storage facility 1 is equipped with a discharging conveyor 10. The article storage facility 1 according to the present embodiment will be described below, focusing on the differences from the embodiment described above. Note that configurations and features that have not been explicitly described are the same as in the embodiment described above.

Fig. 3 is a side view of the article storage facility 1 according to the second embodiment. Note that in Fig. 3, the first multilevel rack 2A, the first raising and lowering apparatus 6A, the standby conveyor 15A, the second raising and lowering apparatus 7A, and the second multilevel rack 3A on the second direction-first side Y1 (that is, at the front) are illustrated. The article storage facility 1 according to the present embodiment is equipped with the discharging conveyor 10 that discharges an article 22 received by the first raising and lowering conveyor 16 from the loading conveyor 8 without passing via a standby conveyor 15. In more detail, the discharging conveyor 10 depicted in Fig. 3 is capable of receiving an article 22 from the loading conveyor 8 via the first raising and lowering conveyor 16 without passing via a standby conveyor 15 and passing the article 22 to the unloading conveyor 9 via the second raising and lowering conveyor 19 without passing via a standby conveyor 15.

As described in the embodiment given above, the articles 22 conveyed by the loading conveyor 8 are each provided with a label or a storage medium, for example. By reading information from the label while an article 22 is being conveyed by the loading conveyor 8, the control apparatus of the article storage facility 1 decides on which shelf that article 22 is to be stored (that is, the storage destination). However, when an article 22 is not provided with a label, or when a label is provided but the information cannot be read due to soiling or damage, the control apparatus does not load the article 22 into the first multilevel rack 2 or second multilevel rack 3. In more detail, when the control apparatus of the article storage facility 1 cannot read the information included in a label, a command for discharging that article 22 from the discharging conveyor 10 is issued to the first raising and lowering apparatus 6, the discharging conveyor 10, the second raising and lowering apparatus 7 and the unloading conveyor 9. In this case, the article 22 conveyed by the loading conveyor 8 is passed to the first raising and lowering conveyor 16 of the first raising and lowering apparatus 6. The first raising and lowering apparatus 6 then passes the article 22 to the adjacent discharging conveyor 10 without raising or lowering the first raising and lowering conveyor 16. The discharging conveyor 10 then passes the article 22 to the second raising and lowering conveyor 19 of the second raising and lowering apparatus 7, which in turn passes the article 22 to the unloading conveyor 9. As a result, the article 22 is unloaded by the unloading conveyor 9.

In this way, when it is desirable to immediately discharge an article 22 that has been brought in from the loading conveyor 8 to the unloading conveyor 9, the article 22 can be conveyed to the unloading conveyor 9 via the discharging conveyor 10 without passing via a standby conveyor 15. As a result, redundant operations such as operating the standby conveyor 15 to transport an unwanted article 22 are eliminated.

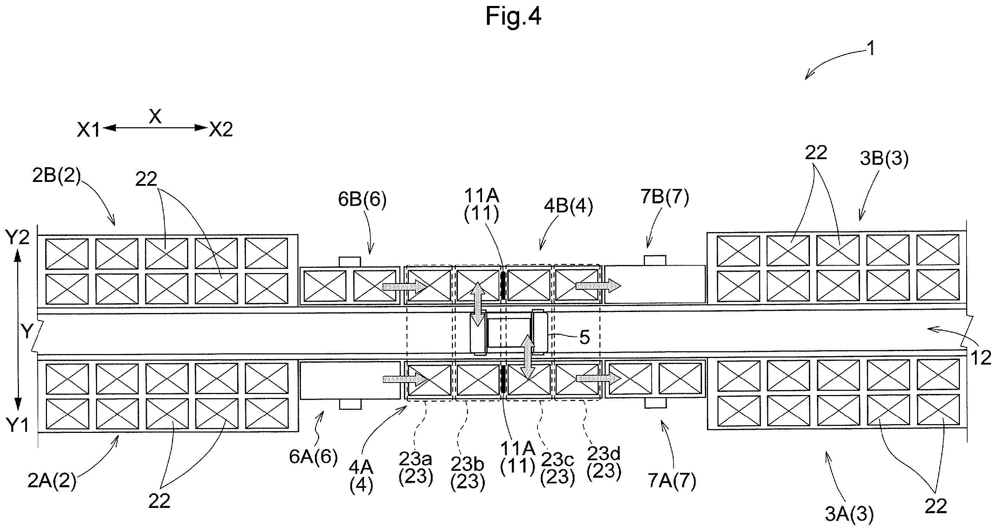

Next, a third embodiment of an article storage facility 1 will be described with reference to Fig. 4. The present embodiment differs from the embodiments described above in that the standby conveyors 15 of the article storage facility 1 are provided with stoppers 11A (11). The article storage facility 1 according to the present embodiment will be described below, focusing on the differences from the embodiments described above. Note that configurations and features that have not been explicitly described are the same as in the embodiments described above.

Fig. 4 is a top view of the article storage facility 1 according to the third embodiment. As indicated in the drawings, the loading regions 23 of the standby conveyors 15 are provided with a stopper 11A that stops movement of an article 22 by the standby conveyor 15 by contacting the article 22 from the first direction-second side X2. In the present embodiment, the first direction X and the "conveying direction" are the same direction, and the first direction-second side X2 and a "conveying direction-second side" are the same side. In the same way, the first direction-first side X1 and the "conveying direction-first side" are the same side.

At least one loading region out of the loading regions 23 positioned on the first direction-second side X2 of the stopper 11A is used as a position where the transfer shuttle 5 passes articles 22 to a standby conveyor 15.

At least one other loading region out of the loading regions 23 positioned on the first direction-first side X1, which is opposite the first direction-second side X2, of the stopper 11A is used as a position where the transfer shuttle 5 receives articles 22 from a standby conveyor 15.

In the example depicted in Fig. 4, the standby conveyor 15 is provided with four loading regions 23, that is, a first loading region 23a, a second loading region 23b, a third loading region 23c, and a fourth loading region 23d. The stopper 11A is provided between the second loading region 23b and the third loading region 23c. Accordingly, even when the standby conveyor 15 operates to convey a loaded article 22 in the conveying direction, conveying of an article 22 placed at the second loading region 23b toward the first direction-second side X2 is blocked, so that the article 22 is not conveyed to the third loading region 23c.

At least one loading region out of the loading regions 23 positioned on the first direction-second side X2 of the stopper 11A is used as a position where the transfer shuttle 5 passes articles 22 to the standby conveyor 15. At least one other loading region out of the loading regions 23 positioned on the first direction-first side X1, which is opposite the first direction-second side X2, of the stopper 11A is used as a position where the transfer shuttle 5 receives articles 22 from the standby conveyor 15.

In this way, the stopper 11A can block movement of an article 22, which has placed closer to the first direction-first side X1 than the stopper 11A, from toward the first direction-second side X2. As a result, it is possible to place articles 22 on the first direction-second side X2 and the first direction-first side X1, respectively, of the stopper 11A on the standby conveyor 15 to distinguish between articles 22 being unloaded that have conveyed out of the first multilevel rack 2 and the second multilevel rack 3 and articles 22 waiting to be loaded into the first multilevel rack 2 and the second multilevel rack 3.

Note that the position of the stopper 11A (11) is not limited to the illustrated example, and can be changed as appropriate. As one example, the stopper 11A may be provided between the first loading region 23a and the second loading region 23b, or the stopper 11A may be provided between the third loading region 23c and the fourth loading region 23d. Also, the positions of the stoppers 11A in the first direction X may be the same or different between the stand-by conveyor 15A on the second direction-first side Y1 and the stand-by conveyor 15B on the second direction-second side Y2.

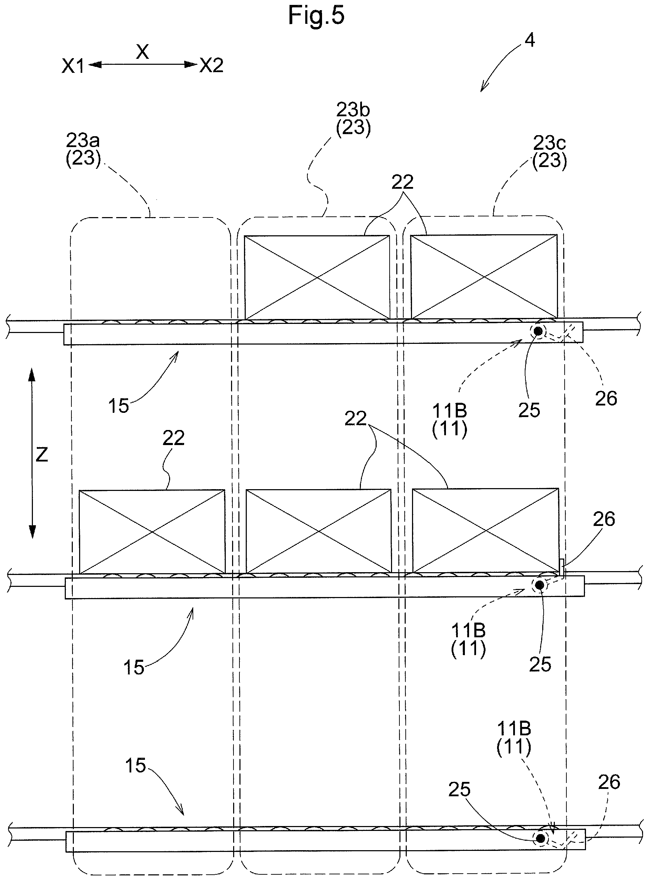

Next, a fourth embodiment of an article storage facility 1 will be described with reference to Fig. 5. The present embodiment differs from the embodiments described above in that the standby conveyors 15 of the article storage facility 1 are provided with stoppers 11B (11) that have changeable postures. The article storage facility 1 according to the present embodiment will be described below, focusing on the differences from the embodiments described above. Note that configurations and features that have not been explicitly described are the same as in the embodiments described above.

Fig. 5 is a side view of the standby station 4 in the article storage facility 1 according to the fourth embodiment. Each stopper 11B is configured to be changeable between a contacting posture, which contacts an article 22 to stop movement of the article 22, and a non-contacting posture, where the stopper 11B is retracted and does not contact the article 22. As one example, the posture of a stopper 11B is changed using the driving force of a driving source, such as a motor. The operation of this driving source is controlled by the control apparatus of the article storage facility 1, for example.

In the example depicted in Fig. 5, each stopper 11B is equipped with a swinging member 26 and part of the swinging member 26 is attached to the standby conveyor 15 so as to enable swinging about a pivot 25 as a swinging axis. In Fig. 5, the standby conveyor 15 on the second level from the top (that is, the middle level) has a stopper 11B in the contacting posture so that part (a "contacting part") of the swinging member 26 protrudes above the loading surface of the standby conveyor 15 so as to contact an article 22 loaded onto the loading surface of the standby conveyor 15. On the other hand, in Fig. 5, the stoppers 11B of the standby conveyors 15 on the first level and third level from the top (that is, the top level and the bottom level) are in the non-contacting posture, with the swinging members 26 retracted below the loading surfaces of the standby conveyors 15 so as to not contact articles 22 loaded onto the loading surface of the standby conveyors 15.

By providing the stoppers 11B of the configuration described above, movement of the articles 22 by a standby conveyor 15 can be stopped as necessary by a stopper 11B.

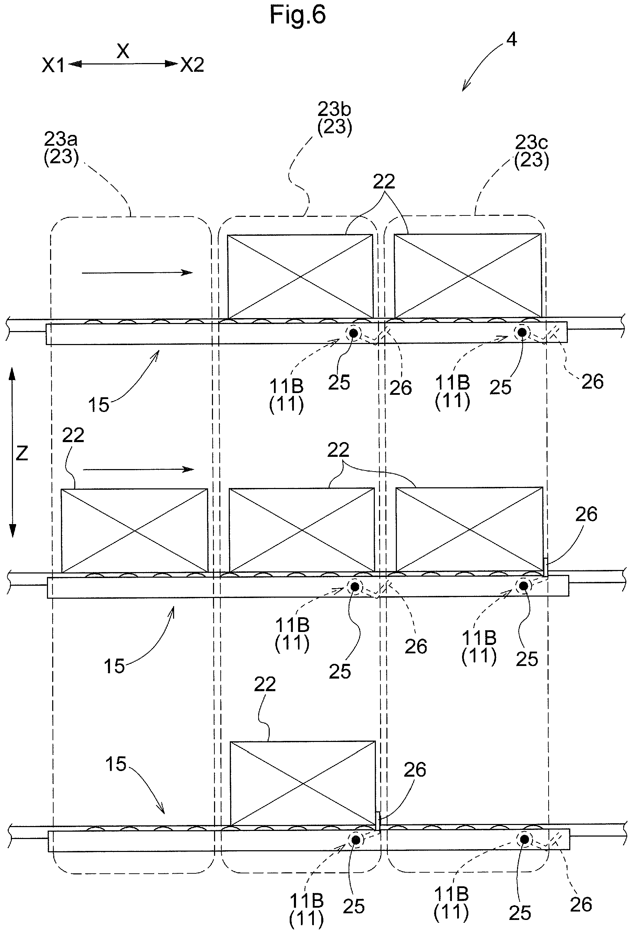

Next, a fifth embodiment of an article storage facility 1 will be described with reference to Fig. 6. The present embodiment differs from the embodiments described above in that the standby conveyors 15 of the article storage facility 1 are provided with a plurality of stoppers 11B (11). The article storage facility 1 according to the present embodiment will be described below, focusing on the differences from the embodiments described above. Note that configurations and features that have not been explicitly described are the same as in the embodiments described above.

Fig. 6 is a side view of the standby station 4 in the article storage facility 1 according to the fifth embodiment. In the present embodiment, individual standby conveyors 15 are provided with a plurality of stoppers 11B. Each stopper 11B is configured so that its posture can be change between a contacting posture and a non-contacting posture, in the same way as the fourth embodiment described above. Each standby conveyor 15 is provided with the stoppers 11B at two locations.

In the example depicted in Fig. 6, both stoppers 11B are in the non-contacting posture for the standby conveyor 15 on the first level from the top (that is, the top level). For the standby conveyor 15 on the second level from the top (that is, the middle level), the stopper 11B that can contact an article 22 between the loading regions 23b and 23c is in the non-contacting posture, and the stopper 11B that can contact an article 22 closer to the first direction-second side X2 than the loading region 23c is in the contacting posture. For the standby conveyor 15 on the third level from the top (that is, the bottom level), the stopper 11B that can contact an article 22 between the loading regions 23b and 23c is in the contacting posture, and the stopper 11B that can contact an article 22 closer to the first direction-second side X2 than the loading region 23c is in the non-contacting posture.

In this way, by providing a plurality of the stoppers 11B that are configured to be changeable between the contacting posture and the non-contacting posture on an individual standby conveyor 15, it is possible to change the number of loading regions 23 used as loading regions where the transfer shuttle 5 passes articles 22 to a standby conveyor 15 and the number of loading regions 23 used as loading regions where the transfer shuttle 5 receives articles 22 from a standby conveyor 15.

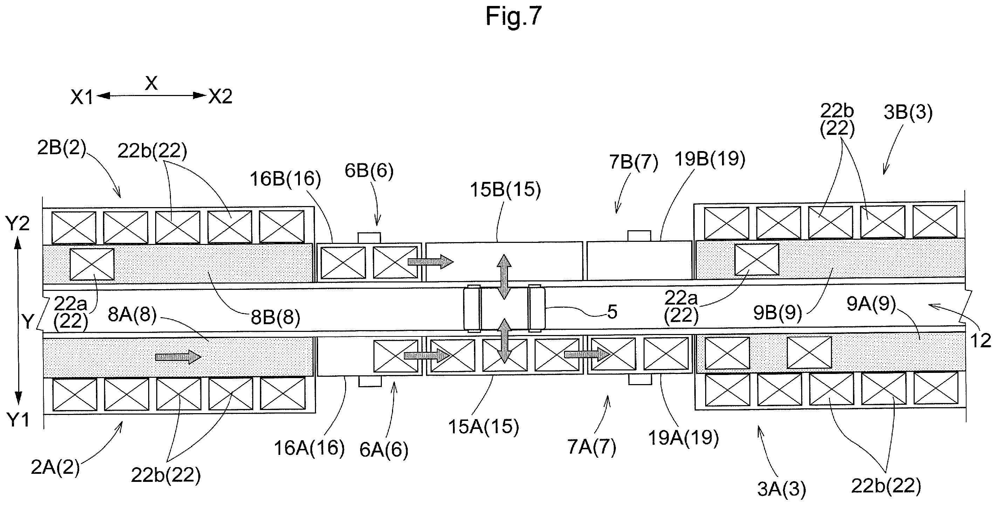

Next, a sixth embodiment of an article storage facility 1 will be described with reference to Figs. 7 to 9. The present embodiment differs from the embodiments described above in that the number of levels of the first shelves 13 of the first multilevel rack 2 and the number of levels of the second shelves 14 of the second multilevel rack 3 are different. The article storage facility 1 according to the present embodiment will be described below, focusing on the differences from the embodiments described above. Note that configurations and features that have not been explicitly described are the same as in the embodiments described above.

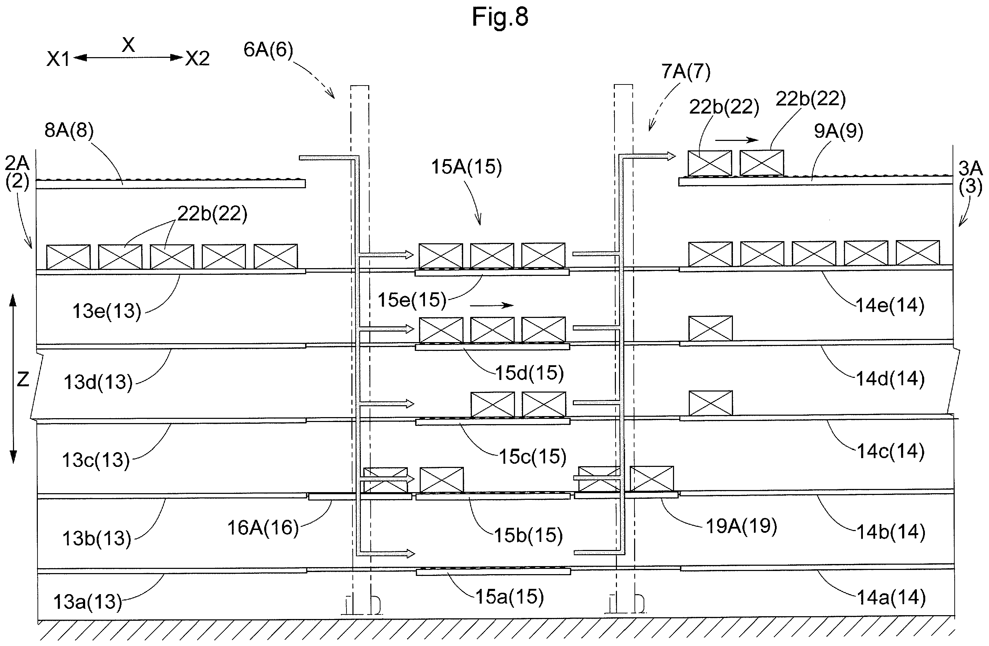

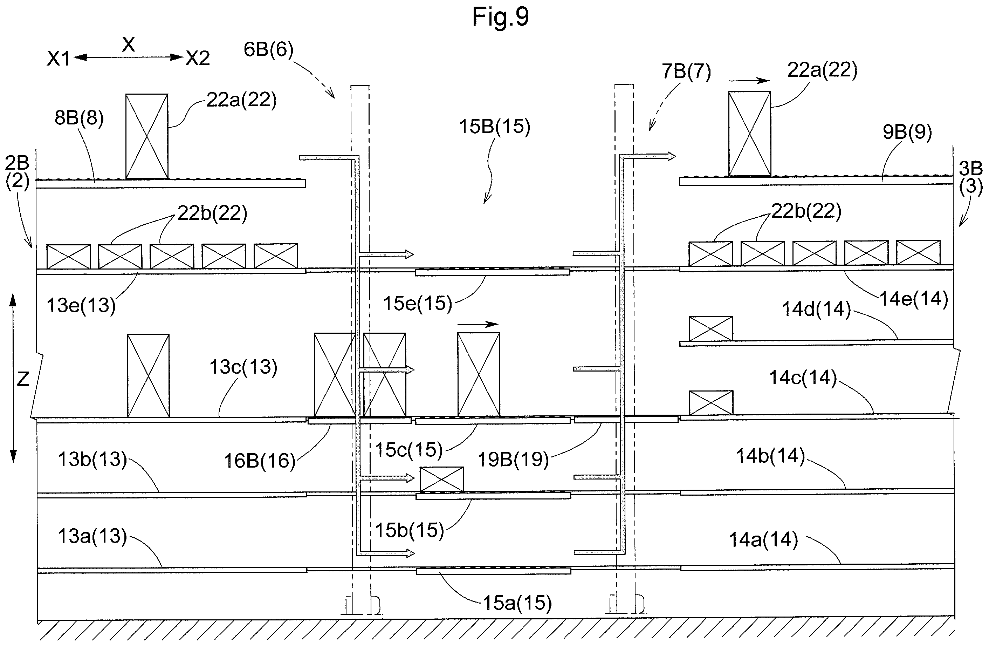

Fig. 7 is a top view of an article storage facility 1 according to the sixth embodiment. Figs. 8 and 9 are side views of the article storage facility 1 according to the sixth embodiment. As depicted in Fig. 7, the first multilevel rack 2A, the first raising and lowering apparatus 6A, the standby conveyor 15A, the second raising and lowering apparatus 7A, and the second multilevel rack 3A on the second direction-first side Y1 (that is, at the front), and the first multilevel rack 2B, the first raising and lowering apparatus 6B, the standby conveyor 15, the second raising and lowering apparatus 7, and the second multilevel rack 3B on the second direction-second side Y2 (that is, at the rear) are provided in parallel with the travel path 12 in between.

The loading conveyor 8A on the second direction-first side Y1 is capable of conveying articles 22 to be loaded into the first multilevel rack 2 or the second multilevel rack 3 on the second direction-first side Y1. This loading conveyor 8A is disposed above the first multilevel rack 2A and at a position that coincides with the first multilevel rack 2A when looking from above or below. The loading conveyor 8B on the second direction-second side Y2 is capable of conveying articles 22 to be loaded into the first multilevel rack 2 or the second multilevel rack 3 on the second direction-second side Y2. This loading conveyor 8B is disposed above the first multilevel rack 2B and at a position that coincides with the first multilevel rack 2B when looking from above or below.

The unloading conveyor 9A on the second direction-first side Y1 is capable of conveying articles 22 to be unloaded from the first multilevel rack 2 or the second multilevel rack 3. The unloading conveyor 9A is disposed above the second multilevel rack 3A and at a position that coincides with the second multilevel rack 3A when looking from above or below. The unloading conveyor 9B on the second direction-second side Y2 is capable of conveying articles 22 to be unloaded from the first multilevel rack 2 or the second multilevel rack 3. The unloading conveyor 9B is disposed above the second multilevel rack 3B and at a position that coincides with the second multilevel rack 3B when looking from above or below.

As described later, tall articles 22a (22) are loaded by the loading conveyor 8B on the second direction-second side Y2 and are unloaded by the unloading conveyor 9B on the second direction-second side Y2. Short articles 22b (22) can be loaded by both the loading conveyor 8A on the second direction-first side Y1 and the loading conveyor 8B on the second direction-second side Y2, and can be unloaded by both the unloading conveyor 9A and the unloading conveyor 9B on the second direction-second side Y2.

Fig. 8 is a side view of the equipment on the second direction-first side Y1 depicted in Fig. 7 (that is, the first multilevel rack 2A, the first raising and lowering apparatus 6A, the standby conveyor 15A, the second raising and lowering apparatus 7A, and the second multilevel rack 3A). Fig. 9 is a side view of the equipment on the second direction-second side Y2 depicted in Fig. 7 (that is, the first multilevel rack 2B, the first raising and lowering apparatus 6B, the standby conveyors 15, the second raising and lowering apparatus 7, and the second multilevel rack 3B).

In the example depicted in Fig. 8, out of the equipment on the second direction-first side Y1, the number of levels of the first shelves 13 (13a, 13b, 13c, 13d, and 13e) in the first multilevel rack 2A and the number of levels of the second shelves 14 (14a, 14b, 14c, 14d, and 14e) in the second multilevel rack 3A are the same at five levels. The intervals (pitch) between the first shelves 13 in the first multilevel rack 2A and the intervals between the second shelves 14 in the second multilevel rack 3A are equal. Corresponding to this, the same number, that is, five levels, of standby conveyors 15 (15a, 15b, 15c, 15d, and 15e) are also provided. In the present embodiment, the first shelves 13 of the first multilevel rack 2A and the second shelves 14 of the second multilevel rack 3A are designed to accommodate relatively short articles 22b (22) as depicted in the drawings.

In the example depicted in Fig. 9, in the equipment on the second direction-second side Y2, the number of levels of the first shelves 13 (13a, 13b, 13c, 13e) in the first multilevel rack 2B is four and the number of levels of the second shelves 14 (14a, 14b, 14c, 14d, 14e) in the second multilevel rack 3A is five, which respectively differ. In more detail, the interval between the first shelf 13c and the first shelf 13e of the first multilevel rack 2B is wider than the intervals between the other shelves. The standby conveyors 15 (15a, 15b, 15c, and 15e) are provided on the same number of levels, that is, four, as the first shelves 13 (13a, 13b, 13c, and 13e). In the present embodiment, the first shelf 13c of the first multilevel rack 2B is designed to accommodate relatively tall articles 22a (22). The first shelves 13a, 13b, and 13e of the first multilevel rack 2B are designed to accommodate relatively short articles 22b (22).

Note that as depicted in Fig. 9, in the equipment on the second direction-second side Y2, a standby conveyor 15 is not provided on the same level as the second shelf 14d of the second multilevel rack 3B. However, as depicted in Fig. 8, one standby conveyor 15 (15d) provided in the equipment on the second direction-first side Y1 is at the same level as the second shelf 14d in the second multilevel rack 3B on the second direction-second side Y2. This means that a transfer shuttle 5 is capable of passing articles 22b received from a standby conveyor 15 (15d) provided in the equipment on the second direction-first side Y1 to the second shelf 14d in the second multilevel rack 3B in the equipment on the second direction-second side Y2. In the same way, the transfer shuttle 5 is capable of passing articles 22b received from the second shelf 14d in the second multilevel rack 3B in the equipment on the second direction-second side Y2 to the standby conveyor 15 (15d) provided in the equipment on the second direction-first side Y1.

Other embodiments of an article storage facility 1 will now be described.

The configuration of the discharging conveyor 10 is not limited to the configuration described above and may be modified as appropriate.

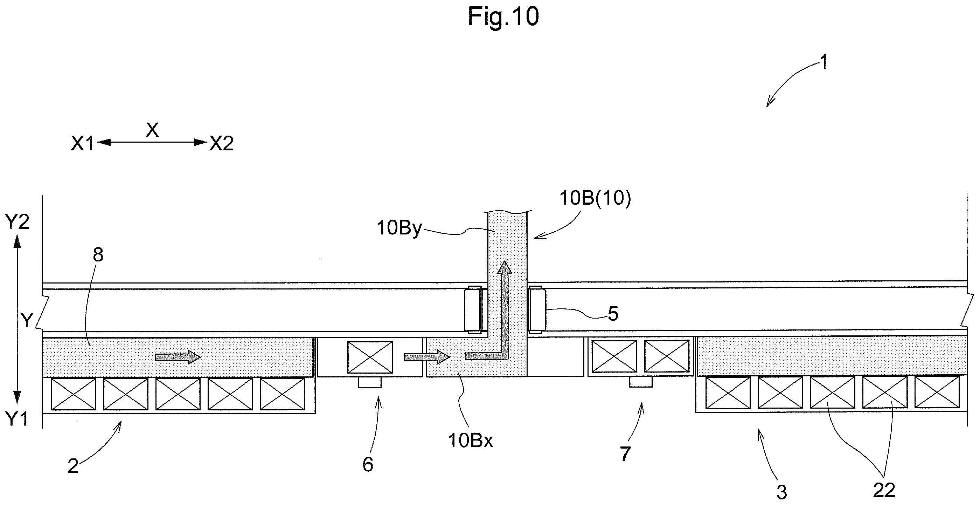

As one example, Fig. 10 is a top view of an article storage facility 1 according to another embodiment. The article storage facility 1 depicted in Fig. 10 is equipped with a discharging conveyor 10B (10) for discharging an article 22 received from the loading conveyor 8 by the first raising and lowering conveyor 16 without passing a standby conveyor 15. In more detail, the discharging conveyor 10 depicted in Fig. 10 is bent at a midway position and does not pass articles 22 to the unloading conveyor 9. This discharging conveyor 10B is a combination of an X-direction part 10Bx that conveys an article 22 along the first direction X and a Y-direction part 10. By that conveys the article 22 along the second direction Y, and is therefore bent in shape. By using this configuration, the discharging conveyor 10B is capable of discharging articles 22 received from the first raising and lowering conveyor 16 of the first raising and lowering apparatus 6 to outside the article storage facility 1. In particular, the unloading conveyor 9 is no longer required to convey the articles 22.

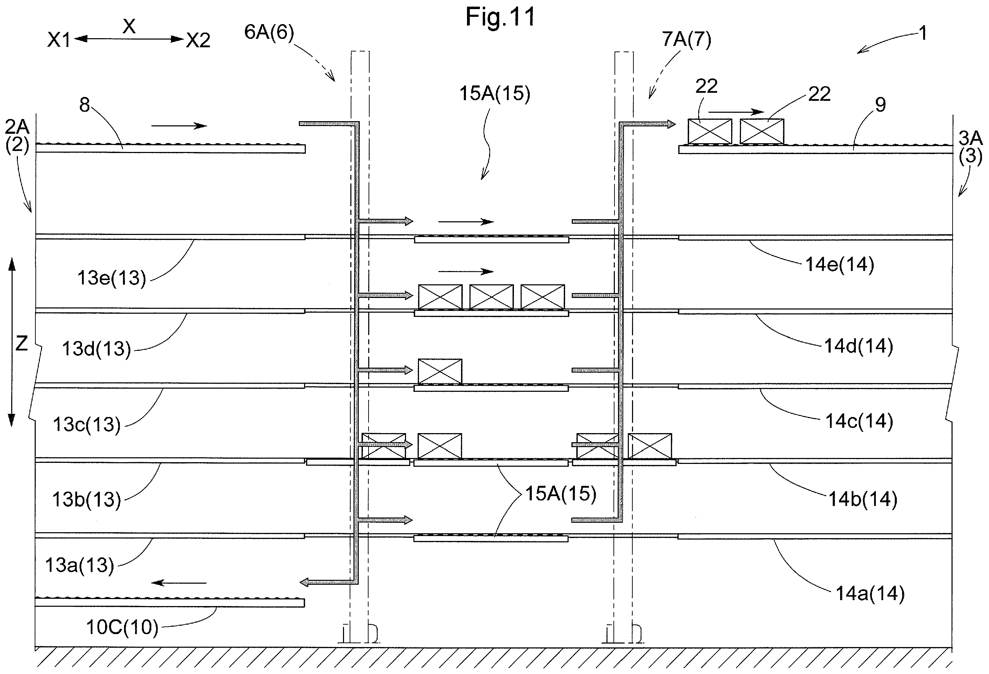

Fig. 11 is a side view of an article storage facility 1 according to another embodiment. Note that in Fig. 11, the first multilevel rack 2A, the first raising and lowering apparatus 6A, the standby conveyor 15A, the second raising and lowering apparatus 7A, and the second multilevel rack 3A on the second direction-first side Y1 (that is, at the front) are illustrated. The article storage facility 1 depicted in Fig. 11 is equipped with a discharging conveyor 10C (10) for discharging an article 22 received from the loading conveyor 8 by the first raising and lowering conveyor 16 without passing via a standby conveyor 15. In more detail, positions that coincide with the first multilevel rack 2 when looking from above and below along the vertical direction Z exist both above and below the first multilevel rack 2, and out of these, the loading conveyor 8 is located above the first multilevel rack 2 at a position that coincides with the first multilevel rack 2 when looking from above or below and the discharging conveyor 10C is located below the first multilevel rack 2 at a position that coincides with the first multilevel rack 2 when looking from above or below. With this configuration, the discharging conveyor 10C is capable of discharging articles 22 received from the first raising and lowering conveyor 16 of the first raising and lowering apparatus 6 to outside the article storage facility 1. In particular, the unloading conveyor 9 is no longer required to convey the articles 22.

The shapes, installed positions, installed numbers, and the like of the stoppers 11 described in the above embodiments are given for illustrative purposes and can be changed as appropriate.

In the embodiments described above, the number of transfer shuttles 5 traveling on the same level (that is, the same travel path 12) may be one or may be plural. As one example, it is possible to use a configuration where two transfer shuttles 5 that run on the same level (that is, the same travel path 12) are installed, one of the transfer shuttles 5 transfers articles 22 between the first multilevel racks 2 and the standby conveyors 15, and the other transfer shuttle 5 transfers articles 22 between the second multilevel racks 3 and the standby conveyors 15.

In the embodiments described above, the conveying directions of the articles 22 by the respective conveyors may be changed as appropriate. As one example, the direction in which articles 22 are conveyed by the loading conveyor 8 may be reversed to cause the loading conveyor 8 to function as the unloading conveyor 9, and the direction in which articles 22 are conveyed by the unloading conveyor 9 may be reversed to cause the unloading conveyor 9 to function as the loading conveyor 8. The directions in which articles 22 are conveyed by first raising and lowering conveyor 16, the second raising and lowering conveyor 19, and the standby conveyors 15 may also be changed as appropriate.

An overview of the article storage facilities described above is given below.

An article storage facility includes: a first multilevel rack including first shelves on a plurality of levels, with the first shelves on the respective levels being disposed along a first direction across a horizontal plane; a second multilevel rack including second shelves on a plurality of levels, with the second shelves on the respective levels being disposed along the first direction and closer to one side in the first direction than the first multilevel rack; a standby station disposed between the first multilevel rack and the second multilevel rack in the first direction and includes standby conveyors on a number of levels that is at least equal to whichever of the first shelves and the second shelves has a lower number of levels; a plurality of transfer shuttles disposed for respective levels of the standby conveyors or disposed for the standby conveyors on a plurality of levels, configured to travel along the first direction, and to transfer articles between the standby conveyors and the first shelves and the second shelves; a first raising and lowering apparatus including a first raising and lowering conveyor, disposed between the first multilevel rack and the standby station in the first direction and configured to transfer the articles to and from the standby conveyors, and a first raising and lowering mechanism configured to raise and lower the first raising and lowering conveyor between every level of the standby conveyors; and a second raising and lowering apparatus including a second raising and lowering conveyor, disposed between the second multilevel rack and the standby station in the first direction and configured to transfer the articles to and from the standby conveyors, and a second raising and lowering mechanism configured to raise and lower the second raising and lowering conveyor between every level of the standby conveyors.

According to the above configuration, both the first raising and lowering conveyor of the first raising and lowering apparatus and the second raising and lowering conveyor of the second raising and lowering apparatus can transfer articles to and from the respective levels of the standby station. That is, two raising and lowering apparatuses are provided for one standby station, raising and lowering of articles can be performed independently by the two raising and lowering apparatuses, and the two raising and lowering apparatuses can independently transfer articles to and from the standby conveyors on the respective levels of the standby station. This means that it is possible to increase the efficiency when raising and lowering articles. Accordingly, an article storage facility that can efficiently load and unload articles to and from a plurality of multilevel racks is realized.

It is preferable to further include a loading conveyor configured to convey the articles to be loaded into the first multilevel rack or the second multilevel rack; and an unloading conveyor configured to convey the articles to be unloaded from the first multilevel rack or the second multilevel rack, for the first raising and lowering mechanism to move the first raising and lowering conveyor to a position where the first raising and lowering conveyor receives the articles from the loading conveyor, and for the second raising and lowering mechanism to move the second raising and lowering conveyor to a position where the articles are passed from the second raising and lowering conveyor to the unloading conveyor.

According to the above configuration, the first raising and lowering mechanism also moves the first raising and lowering conveyor to a position where the first raising and lowering conveyor receives articles from the loading conveyor. That is, the first raising and lowering apparatus can be used as a raising and lowering apparatus for loading articles. In this case, the first raising and lowering mechanism repeats a series of operations where the first raising and lowering conveyor is moved to a position where introduced articles are received from the loading conveyor and the first raising and lowering conveyor is then moved to a position where the articles are transferred to a predetermined standby conveyor. Similarly, the second raising and lowering mechanism also moves the second raising and lowering conveyor to a position where the second raising and lowering conveyor passes articles to the unloading conveyor. That is, the second raising and lowering apparatus can be used as a raising and lowering apparatus for unloading articles. In this case, the second raising and lowering mechanism repeats a series of operations where the second raising and lowering conveyor is moved to a position where articles are received from a predetermined standby conveyor and the second raising and lowering conveyor is then moved to a position where the articles are transferred to the unloading conveyor. In this way, by dividing the roles of the first raising and lowering apparatus and the second raising and lowering apparatus into loading and unloading, the respective operations of the first raising and lowering apparatus and the second raising and lowering apparatus are simplified and articles are raised and lowered articles with improved efficiency when articles are loaded and when articles are unloaded. As a result, the efficiency when loading and unloading articles into and from the first multilevel rack and the second multilevel rack can be further improved.

The loading conveyor is preferably disposed at a position that coincides with the first multilevel rack as viewed from above or below along an up-down direction, and the unloading conveyor is preferably disposed at a position that coincides with the second multilevel rack as viewed from above or below along the up-down direction.

According to this configuration, when setting up the article storage facility, no floor space is needed to install the loading conveyor and no floor space is needed to install the unloading conveyor. As a result, the floor space required for placing the article storage facility can be made smaller.

The article storage facility preferably further includes a discharging conveyor configured to discharge the articles, which have been received by the first raising and lowering conveyor from the loading conveyor, without passing the standby conveyors.

According to this configuration, when it is desirable to discharge an article that has been introduced from the loading conveyor immediately to the unloading conveyor, the article can be discharged by the discharging conveyor without passing via the standby conveyors. As a result, priority is given to operating the standby conveyors to load articles into the first multilevel rack and the second multilevel rack and unload articles from the first multilevel rack and the second multilevel rack, which eliminates redundant operations such as operating a standby conveyor to convey unnecessary articles.

With (i) a side in the first direction where the first shelves are disposed relative to the second shelves being a first direction-first side, and (ii) a side where the second shelves are disposed relative to the first shelves being a first direction-second side, it is preferable for the transfer shuttle to be configured to run in the first direction between an end portion at the first direction-first side of the first shelves to an end portion at the first direction-second side of the second shelves and transfer articles between the first shelves, the standby conveyor, and the second shelves.

According to this configuration, one transfer shuttle travels between an end portion on the first direction-first side of a first shelf and an end portion on the first direction-second side of a second shelf and transfers articles to and from the first shelf, the standby conveyor, and the second shelf. That is, although there is the risk of movement of a plurality of transfer shuttles interfering with each other when a plurality of transfer shuttles run on the same travel path, such problem does not occur with the above configuration. Accordingly, control of the transfer shuttles can be simplified.

It is preferable for the first raising and lowering mechanism to include a first mast configured to guide the first raising and lowering conveyor in the up-down direction, for the second raising and lowering mechanism to include a second mast configured to guide the second raising and lowering conveyor in the up-down direction, and for the first mast and the second mast to be disposed at positions that do not coincide with travel paths of the transfer shuttles as viewed from above or below along the up-down direction.

According to this configuration, the travel paths of the transfer shuttles are not blocked by the first mast and the second mast. As a result, a single transfer shuttle can freely travel along the first direction to both sides of the first raising and lowering apparatus (that is, to the first multilevel rack side and the standby station side). In the same way, a single transfer shuttle can freely travel along the first direction to both sides of the second raising and lowering apparatus (that is, to the second multilevel rack side and the standby station side). Accordingly, conveying of articles between the first shelf and the standby conveyor and conveying of articles between the second shelf and the standby conveyor can be appropriately performed by a transfer shuttle.

It is also preferable for each standby conveyor to include loading regions where the articles are loaded in a row along the first direction and move the loaded articles along the first direction, for at least one loading region of the loading regions to be used as a position where the transfer shuttle transfer the articles to a standby conveyor, and for at least one other loading region of the loading regions to be used as a position where a transfer shuttle receives the articles from the standby conveyor.

According to this configuration, a position where the transfer shuttle passes articles to a standby conveyor and a position where the transfer shuttle receives articles from the standby conveyor are set in loading regions on a standby conveyor where a plurality of articles can be placed. As a result, it is possible to avoid a situation where articles that are being loaded into the first and second multilevel racks and articles that are being unloaded from the first and second multilevel racks are arranged in an unordered manner in the loading regions. Accordingly, it is possible to efficiently carry out the loading and unloading of articles via the standby conveyors.

It is preferable for each standby conveyor to include loading regions where the articles are loaded in a row along the first direction and move the loaded articles toward a second side in a conveying direction, which is one side in the conveying direction along the first direction, for the loading regions to be provided with a stopper configured to stop movement of the articles by the standby conveyor by contacting the articles from a second side in the conveying direction, for at least one loading region of the loading regions positioned on the second side in the conveying direction of the stopper to be used as a loading region where the transfer shuttle passes the articles to the standby conveyor, and for at least one other loading region of the loading regions positioned on a first side in the conveying direction, which is an opposite side to the second side in the conveying direction, of the stopper to be used as a loading region where the transfer shuttle receives the articles from the standby conveyor.

According to this configuration, the stopper can prevent articles placed on the first side in the conveying direction of the stopper from moving toward the second side in the conveying direction. As a result, it is possible to place the articles being unloaded from the first and second multilevel racks and articles waiting to be loaded into the first and second multilevel racks separately on the conveying direction-first side and the conveying direction-second side of the stopper.

It is also preferable for the stopper to be configured to be changeable between (i) a contacting posture where movement of the articles is stopped by contacting the articles and a (ii) non-contacting posture where the stopper is retracted in such a manner as to not contact the articles.

According to this configuration, movement of articles by the standby conveyor can be stopped as required by the stopper. In addition, by changing the posture of the stopper, the boundary between the regions where articles being unloaded are placed and the regions where articles waiting to be loaded are placed can be changed according to the situation.

With a direction perpendicular to the first direction as viewed from above or below along the up-down direction being a "second direction, the first multilevel rack, the second multilevel rack, the standby station, the first raising and lowering apparatus, and the second raising and lowering apparatus are preferably all disposed in pairs that face each other in the second direction with travel paths of the transfer shuttles in between.

According to this configuration, it is possible to make the first multilevel rack and the second multilevel rack larger in scale and store more articles.

The article storage facility preferably includes equal numbers of standby conveyors, the first shelves, and the second shelves.

When the number of levels of the first shelves in the first multilevel rack and the number of levels of the second shelves in the second multilevel rack are different, a non-corresponding shelf, which is a shelf disposed at a height that does not correspond to a shelf in the multilevel rack with a smaller number of levels, is produced in the multilevel rack with a larger number of levels. In this case, it is also necessary to provide a standby conveyor and a transfer shuttle for transferring articles to and from the non-corresponding shelf only. Since this standby conveyor and transfer shuttle are used to transfer articles to and from the non-corresponding shelf only, there may be cases where this standby conveyor and transfer shuttle are not effectively used in a process that conveys articles.

On the other hand, since the standby conveyors, the first shelves, and the second shelves are provided with the same number of levels in the configuration described above. Every standby conveyor and transfer shuttle transfers articles between the first shelves of the first multilevel rack and the second shelves of the second multilevel rack. As a result, the standby conveyors and the transfer shuttles can be effectively used in a process that conveys articles.

The technology according to the present invention can be used for an article storage facility capable of efficiently loading and unloading articles onto and from a plurality of multilevel racks.

### REFERENCE SIGNS

- 1: article storage facility
- 2 (2A, 2B): first multilevel rack
- 3 (3A, 3B): second multilevel rack
- 4 (4A, 4B): standby station
- 5: transfer shuttle
- 6 (6A, 6B): first raising and lowering apparatus
- 7 (7A, 7B): second raising and lowering apparatus
- 8 (8A, 8B): loading conveyor
- 9 (9A, 9B): unloading conveyor
- 10 (10A, 10B, 10C): discharging conveyor
- 10Bx: X direction part
- 11Bx: X direction part
- 11By: Y direction part
- 11 (11A, 11B): stopper
- 12: travel path
- 13 (13a, 13b, 13c, 13e): first shelf
- 14 (14a, 14b, 14c, 14d, 14e): second shelf
- 15 (15A, 15B): standby conveyor
- 15 (15a, 15b, 15c, and 15e): standby conveyor
- 16 (16A, 16B): first raising and lowering conveyor
- 17 (17A, 17B): first raising and lowering mechanism
- 18 (18A, 18B): first raising and lowering mast
- 19 (19A, 19B): second raising and lowering conveyor
- 20 (20A, 20B): second raising and lowering mechanism
- 21 (21A, 21B): second raising and lowering mast
- 22: article
- 23 (23a, 23b, 23c, 23d): loading region
- 25: pivot
- 26: swinging member
- X: first direction
- X1: first direction-first side
- X2: first direction-second side
- Y: second direction
- Y1: second direction-first side
- Y2: second direction-second side
- Z: vertical direction

## Claims

1. An article storage facility (1) comprising:
a first multilevel rack (2) including first shelves (13) on a plurality of levels, with each first shelf (13) on the respective level being disposed along a first direction (X) across a horizontal plane;
a second multilevel rack (3) including second shelves (14) on a plurality of levels, with each second shelf (14) on the respective level being disposed along the first direction (X) and closer to one side of the article storage facility than the first multilevel rack (2) with respect to the first direction (X);
a standby station (4) disposed between the first multilevel rack (2) and the second multilevel rack (3) in the first direction (X) and including standby conveyors (15) on a number of levels that is at least equal to whichever of the first shelves (13) and the second shelves (14) has a lower number of levels;
a plurality of transfer shuttles (5) disposed for respective levels of the standby conveyors (15) or disposed for the standby conveyors (15) on a plurality of levels, and configured to travel along the first direction (X) and to transfer articles (22) between the standby conveyors (15) and the first shelves (13) and the second shelves (14);
a first raising and lowering apparatus (6) including a first raising and lowering conveyor (16),
configured to transfer the articles (22) to and from the standby conveyors (15), and a first raising and lowering mechanism (17) configured to raise and lower the first raising and lowering conveyor (16) between every level of the standby conveyors (15); and
a second raising and lowering apparatus (7) including a second raising and lowering conveyor (19), configured to transfer the articles (22) to and from the standby conveyors (15), and a second raising and lowering mechanism (20) configured to raise and lower the second raising and lowering conveyor (19) between every level of the standby conveyors (15),
**characterized in that**
the first raising and lowering conveyor (16) is disposed between the first multilevel rack (2) and the standby station (4) in the first direction (X) and the second raising and lowering conveyor (19) is disposed between the second multilevel rack (3) and the standby station (4) in the first direction (X).

2. The article storage facility (1) according to claim 1, further comprising:
a loading conveyor (8) configured to convey the articles (22) to be loaded into the first multilevel rack (2) or the second multilevel rack (3); and
an unloading conveyor (8) configured to convey the articles (22) to be unloaded from the first multilevel rack (2) or the second multilevel rack (3),
wherein the first raising and lowering mechanism (17) also moves the first raising and lowering conveyor (16) to a position where the first raising and lowering conveyor (16) receives the articles (22) from the loading conveyor (8), and
the second raising and lowering mechanism (20) also moves the second raising and lowering conveyor (19) to a position where the articles (22) are passed from the second raising and lowering conveyor (19) to the unloading conveyor (8).

3. The article storage facility (1) according to claim 2,
wherein the loading conveyor (8) is disposed at a position that coincides with the first multilevel rack (2) as viewed from above or below along an up-down direction, and
the unloading conveyor (8) is disposed at a position that coincides with the second multilevel rack (3) as viewed from above or below along the up-down direction.

4. The article storage facility (1) according to claim 2 or claim 3,
further comprising a discharging conveyor (10) configured to discharge the articles (22), which have been received by the first raising and lowering conveyor (16) from the loading conveyor (8), without passing the standby conveyors (15).

5. The article storage facility (1) according to any one of claim 1 to claim 4,
wherein with (i) a side of the article storage facility with respect to the first direction (X) where each first shelf (13) is disposed relative to each second shelf (14) being a first direction (X)-first side, (ii) a side of the article storage facility where each second shelf (14) is disposed relative to each first shelf (13) being a first direction (X)-second side,
the transfer shuttle is configured to run in the first direction (X) between an end portion at the first direction (X)-first side of each first shelf (13) to an end portion at the first direction (X)-second side of each second shelf (14) and transfers the articles (22) between the first shelves (13), the standby conveyor, and the second shelves (14).

6. The article storage facility (1) according to any one of claim 1 to claim 5,
wherein the first raising and lowering mechanism (17) includes a first mast (18) configured to guide the first raising and lowering conveyor (16) in the up-down direction,
the second raising and lowering mechanism (20) includes a second mast (21) configured to guide the second raising and lowering conveyor (19) in the up-down direction, and
the first mast (18) and the second mast (21) are disposed at positions that do not coincide with travel paths of the transfer shuttles (5) as viewed from above or below along the up-down direction.

7. The article storage facility (1) according to any one of claim 1 to claim 6,
wherein each standby conveyor (15) includes loading regions (23) where the articles (22) are loaded in a row along the first direction (X) and moves the loaded articles (22) along the first direction (X),
and at least one loading region of the loading regions (23) is used as a position where the transfer shuttle transfers the articles (22) to the standby conveyor (15), and at least one other loading region of the loading regions (23) is used as a position where the transfer shuttle receives the articles (22) from the standby conveyor (15).

8. The article storage facility (1) according to any one of claim 1 to claim 6,
wherein each standby conveyor (15) includes loading regions (23) where the articles (22) are loaded in a row along the first direction (X) and moves the loaded articles (22) toward a second side in a conveying direction (X2), which is one side in the conveying direction (X2) along the first direction (X),
the loading regions (23) are provided with a stopper (11) configured to stop movement of the articles (22) by the standby conveyor (15) by contacting the articles (22) from a second side in the conveying direction (X2),
at least one loading region of the loading regions (23) positioned on the second side in the conveying direction (X2) of the stopper (11) is used as a loading region where the transfer shuttle (5) passes the articles (22) to the standby conveyor (15), and
at least one other loading region of the loading regions (23) positioned on a first side in the conveying direction (X2), which is an opposite side to the second side in the conveying direction (X2), of the stopper (11) is used as a loading region where the transfer shuttle (5) receives the articles (22) from the standby conveyor (15).

9. The article storage facility (1) according to claim 8,
wherein the stopper (11) is configured to be changeable between (i) a contacting posture where movement of the articles (22) is stopped by contacting the articles (22) and (ii) a non-contacting posture where the stopper (11) is retracted in such a manner as to not contact the articles (22).

10. The article storage facility (1) according to any one of claim 1 to claim 9,
wherein with a direction perpendicular to the first direction (X) as viewed from above or below along the up-down direction being a second direction (Y),
the first multilevel rack (2), the second multilevel rack (3), the standby station (4), the first raising and lowering apparatus (6), and the second raising and lowering apparatus (7) are all disposed in pairs that face each other in the second direction (Y) with travel paths of the transfer shuttles (5) in between.

11. The article storage facility (1) according to any one of claim 1 to claim 10,
comprising equal numbers of the standby conveyors (15), the first shelves (13), and the second shelves (14).

## Patentansprüche

1. Warenlagereinrichtung (1), umfassend:
ein erstes mehrstufiges Regal (2) mit ersten Einlegeböden (13) auf einer Vielzahl von Ebenen, wobei jeder erste Einlegeboden (13) auf der jeweiligen Ebene entlang einer ersten Richtung (X) quer zu einer horizontalen Ebene angeordnet ist;
ein zweites mehrstöckiges Regal (3), das zweite Einlegeböden (14) auf einer Vielzahl von Ebenen beinhaltet, wobei jeder zweite Einlegeboden (14) auf der jeweiligen Ebene entlang der ersten Richtung (X) und näher an einer Seite der Warenlagereinrichtung als das erste mehrstöckige Regal (2) in Bezug auf die erste Richtung (X) angeordnet ist;
eine Standby-Station (4), die zwischen dem ersten mehrstufigen Regal (2) und dem zweiten mehrstufigen Regal (3) in der ersten Richtung (X) angeordnet ist und Standby-Förderer (15) auf einer Anzahl von Ebenen beinhaltet, die mindestens gleich derjenigen der ersten Einlegeböden (13) und der zweiten Einlegeböden (14) ist, die eine geringere Anzahl von Ebenen aufweist;
eine Vielzahl von Transfer-Shuttles (5), die für jeweilige Ebenen der Standby-Förderer (15) oder für die Standby-Förderer (15) auf einer Vielzahl von Ebenen angeordnet und ausgebildet sind, um in der ersten Richtung (X) zu fahren und Waren (22) zwischen den Standby-Förderern (15) und den ersten Einlegeböden (13) und den zweiten Einlegeböden (14) zu transportieren;
eine erste Hebe- und Senkvorrichtung (6), die einen ersten Hebe- und Senkförderer (16), der ausgebildet ist, um die Waren (22) zu und von den Standby-Förderern (15) zu transportieren,
und einen ersten Hebe- und Senkmechanismus (17) umfasst, der ausgebildet ist, um den ersten Hebe- und Senkförderer (16) zwischen jeder Ebene der Standby-Förderer (15) anzuheben und abzusenken; und
eine zweite Hebe- und Senkvorrichtung (7), die einen zweiten Hebe- und Senkförderer (19),
der ausgebildet ist, um die Waren (22) zu und von den Standby-Förderern (15) zu transportieren, und einen zweiten Hebe- und Senkmechanismus (20) umfasst, der ausgebildet ist, um den zweiten Hebe- und Senkförderer (19) zwischen jeder Ebene der Standby-Förderer (15) anzuheben und abzusenken,
**dadurch gekennzeichnet, dass**
der erste Hebe- und Senkförderer (16) zwischen dem ersten mehrstöckigen Regal (2) und der Standby-Station (4) in der ersten Richtung (X) angeordnet ist und der zweite Hebe- und Senkförderer (19) zwischen dem zweiten mehrstöckigen Regal (3) und der Standby-Station (4) in der ersten Richtung (X) angeordnet ist.

2. Warenlagereinrichtung (1) nach Anspruch 1, die ferner umfasst:
einem Beladeförderer (8), der ausgebildet ist, um die in das erste mehrstöckige Regal (2) oder das zweite mehrstöckige Regal (3) zu beschickenden Waren (22) zu fördern; und
einem Entladeförderer (8), der ausgebildet ist, um die aus dem ersten mehrstufigen Regal (2) oder dem zweiten mehrstufigen Regal (3) zu entladenden Waren (22) zu fördern,
wobei der erste Hebe- und Senkmechanismus (17) auch den ersten Hebe- und Senkförderer (16) in eine Position bewegt, in der der erste Hebe- und Senkförderer (16) die Waren (22) vom Beladeförderer (8) aufnimmt, und
der zweite Hebe- und Senkmechanismus (20) auch den zweiten Hebe- und Senkförderer (19) in eine Position bewegt, in der die Waren (22) vom zweiten Hebe- und Senkförderer (19) an den Entladeförderer (8) übergeben werden.

3. Warenlagereinrichtung (1) nach Anspruch 2,
wobei der Beladeförderer (8) an einer Position angeordnet ist, die in Auf-Ab-Richtung von oben oder unten gesehen mit dem ersten mehrstufigen Regal (2) übereinstimmt, und
der Entladeförderer (8) an einer Position angeordnet ist, die mit dem zweiten mehrstufigen Regal (3) übereinstimmt, wenn von oben oder unten entlang der Auf-Ab-Richtung betrachtet wird.

4. Warenlagereinrichtung (1) nach Anspruch 2 oder 3,
die außerdem einen Entladeförderer (10) umfasst, der ausgebildet ist, um die Waren (22), die von dem ersten Hebe- und Senkförderer (16) von dem Beladeförderer (8) aufgenommen wurden, ohne die Standby-Förderer (15) zu passieren, zu entladen.

5. Warenlagereinrichtung (1) nach einem der Ansprüche 1 bis 4,
wobei mit (i) eine Seite der Warenlagereinrichtung in Bezug auf die erste Richtung (X), in der jeder erste Einlegeboden (13) relativ zu jedem zweiten Einlegeboden (14) angeordnet ist, die eine erste Seite in der ersten Richtung (X) ist, (ii) eine Seite der Warenlagereinrichtung, an der jeder zweite Einlegeboden (14) relativ zu jedem ersten Einlegeboden (13) angeordnet ist, die eine zweite Seite in der ersten Richtung (X) ist,
der Transfer-Shuttle ausgebildet ist, in der ersten Richtung (X) zwischen einem Endabschnitt an der ersten Seite in der ersten Richtung (X) jedes ersten Einlegebodens (13) zu einem Endabschnitt an der zweiten Seite in der ersten Richtung (X) jedes zweiten Einlegebodens (14) zu laufen und die Waren (22) zwischen den ersten Einlegeböden (13), dem Standby-Förderer und den zweiten Einlegeböden (14) zu transportieren.

6. Warenlagereinrichtung (1) nach einem der Ansprüche 1 bis 5,
wobei der erste Hebe- und Senkmechanismus (17) einen ersten Mast (18) beinhaltet, der ausgebildet ist, um den ersten Hebe- und Senkförderer (16) in Auf-Ab-Richtung zu führen, der zweite Hebe- und Senkmechanismus (20) einen zweiten Mast (21) beinhaltet, der ausgebildet ist, um den zweiten Hebe- und Senkförderer (19) in Auf-Ab-Richtung zu führen, und
der erste Mast (18) und der zweite Mast (21) an Positionen angeordnet sind, die von oben oder unten entlang der Auf-Ab-Richtung gesehen nicht mit den Fahrwegen der Transfer-Shuttles (5) zusammenfallen.

7. Warenlagereinrichtung (1) nach einem der Ansprüche 1 bis 6,
wobei jeder Standby-Förderer (15) Ladebereiche (23) beinhaltet, in denen die Waren (22) in einer Reihe entlang der ersten Richtung (X) geladen werden, und die geladenen Waren (22) entlang der ersten Richtung (X) bewegt,
und mindestens ein Ladebereich der Ladebereiche (23) als Position verwendet wird, an der der Transfer-Shuttle die Waren (22) auf den Standby-Förderer (15) übergibt, und mindestens ein anderer Ladebereich der Ladebereiche (23) als Position verwendet wird, an der der Transfer-Shuttle die Waren (22) vom Standby-Förderer (15) übernimmt.

8. Warenlagereinrichtung (1) nach einem der Ansprüche 1 bis 6,
wobei jeder Standby-Förderer (15) Ladebereiche (23) beinhaltet, in denen die Waren (22) in einer Reihe entlang der ersten Richtung (X) geladen werden, und die geladenen Waren (22) in einer Förderrichtung (X2), die eine Seite in der Förderrichtung (X2) entlang der ersten Richtung (X) ist, zu einer zweiten Seite bewegt,
die Ladebereiche (23) mit einem Anschlagteil (11) versehen sind, das ausgebildet ist, um die Bewegung der Waren (22) durch den Standby-Förderer (15) durch Kontaktieren der Waren (22) von einer zweiten Seite in der Förderrichtung (X2) anzuhalten,
mindestens ein Ladebereich der Ladebereiche (23), die auf der in Förderrichtung (X2) des Anschlagteils (11) zweiten Seite angeordnet sind, als Ladebereich verwendet wird, in dem der Transfer-Shuttle (5) die Waren (22) an den Standby-Förderer (15) übergibt, und
mindestens ein weiterer Ladebereich der Ladebereiche (23), der auf einer ersten Seite in Förderrichtung (X2) des Anschlagteils (11) angeordnet ist, die eine der zweiten Seite in Förderrichtung (X2) gegenüberliegende Seite ist, als Ladebereich verwendet wird, in dem der Transfer-Shuttle (5) die Waren (22) vom Standby-Förderer (15) übernimmt.

9. Warenlagereinrichtung (1) nach Anspruch 8,
wobei das Anschlagteil (11) ausgebildet ist, zwischen (i) einer Berührungsstellung, in der eine Bewegung der Waren (22) durch Berühren der Waren (22) gestoppt wird, und (ii) einer Nichtberührungsstellung, in der das Anschlagteil (11) so zurückgezogen ist, dass es die Waren (22) nicht berührt, umgeschaltet werden zu können.

10. Warenlagereinrichtung (1) nach einem der Ansprüche 1 bis 9,
wobei in einer Richtung senkrecht zu der ersten Richtung (X), gesehen von oben oder unten entlang der Auf-Ab-Richtung, eine zweite Richtung (Y) ist,
das erste mehrstöckige Regal (2), das zweite mehrstöckige Regal (3), die Standby-Station (4), die erste Hebevorrichtung (6) und die zweite Hebevorrichtung (7) alle paarweise so angeordnet sind, dass sie einander in der zweiten Richtung (Y) gegenüberliegen, wobei sich die Bewegungsbahnen der Transfer-Shuttles (5) dazwischen befinden.

11. Warenlagereinrichtung (1) nach einem der Ansprüche 1 bis 10,
die gleiche Anzahl von Standby-Förderern (15), ersten Einlegeböden (13) und zweiten Einlegeböden (14) umfasst.

## Revendications

1. Installation de stockage d'articles (1) comprenant :
un premier rayonnage multi-niveau (2) comportant des premières tablettes (13) sur une pluralité de niveaux, chaque première tablette (13) sur le niveau respectif étant disposé le long d'une première direction (X) à travers un plan horizontal ;
un deuxième rayonnage multi-niveau (3) comportant des deuxième tablettes (14) sur une pluralité de niveaux, chaque deuxième tablette (14) sur le niveau respectif étant disposé le long de la première direction (X) et plus proche d'un des côtés de ladite installation de stockage d'articles que le premier rayonnage multi-niveau (2) par rapport à la première direction (X) ;
une station de veille (4) qui est disposée entre le premier rayonnage multi-niveau (2) et le deuxième rayonnage multi-niveau (3) dans la première direction (X) et qui comporte des convoyeurs de veille (15) sur un nombre de niveaux qui est au moins égal à celui des premières tablettes (13) et deuxièmes tablettes (14) qui a un nombre inférieur de niveaux ;
une pluralité de navettes de transfert (5) disposées pour des niveaux respectifs des convoyeurs de veille (15) ou disposées pour les convoyeurs de veille (15) sur une pluralité de niveaux, et configurées pour se déplacer le long de la première direction (X) et pour transférer des articles (22) entre les convoyeurs de veille (15) et les premières tablettes (13) et les deuxièmes tablettes (14) ;
un premier appareil de levage et d'abaissement (6) comportant un premier convoyeur de levage et d'abaissement (16), configuré pour transférer les articles (22) vers et depuis les convoyeurs de veille (15), et un premier mécanisme de levage et d'abaissement (17) configuré pour lever et baisser le premier convoyeur de levage et d'abaissement (16) entre chaque niveau des convoyeurs de veille (15) ; et
un deuxième appareil de levage et d'abaissement (7) comportant un deuxième convoyeur de levage et d'abaissement (16), configuré pour transférer les articles (22) vers et depuis les convoyeurs de veille (15), et un deuxième mécanisme de levage et d'abaissement (20) configuré pour lever et baisser le deuxième convoyeur de levage et d'abaissement (16) entre chaque niveau des convoyeurs de veille (15),
**caractérisée en ce que**
le premier convoyeur de levage et d'abaissement (16) est disposé entre le premier rayonnage multi-niveau (2) et la station de veille dans la première direction (X) et le deuxième convoyeur de levage et d'abaissement (19) est disposé entre le deuxième rayonnage multi-niveau (3) et la station de veille dans la première direction (X).

2. Installation de stockage d'articles (1) selon la revendication 1, comprenant en outre :
un convoyeur de chargement (8) configuré pour transporter les articles (22) à charger dans le premier rayonnage multi-niveau (2) ou le deuxième rayonnage multi-niveau (3) ; et
un convoyeur de déchargement (9) configuré pour transporter les articles (22) à décharger du premier rayonnage multi-niveau (2) ou du deuxième rayonnage multi-niveau (3),
le premier mécanisme de levage et d'abaissement (17) étant également destiné à déplacer le premier convoyeur de levage et d'abaissement (16) vers une position où le premier convoyeur de levage et d'abaissement (16) reçoit les articles (22) de la part du convoyeur de chargement (8), et
le deuxième mécanisme de levage et d'abaissement (20) étant également destiné à déplacer le deuxième convoyeur de levage et d'abaissement (19) vers une position où les articles (22) sont passés depuis le deuxième convoyeur de levage et d'abaissement (19) vers le convoyeur de déchargement (8).

3. Installation de stockage d'articles (1) selon la revendication 2, dans laquelle
le convoyeur de chargement (8) est disposé dans une position qui coïncide avec le premier rayonnage multi-niveau (2) vu de dessus ou de dessous le long d'une direction haut-bas, et
le convoyeur de déchargement (8) est disposé dans une position qui coïncide avec le deuxième rayonnage multi-niveau (2) vu de dessus ou de dessous le long de la direction haut-bas.

4. Installation de stockage d'articles (1) selon la revendication 2 ou 3, comprenant en outre un convoyeur de rejet (10) configuré pour rejeter les articles (22), qui ont été reçus par le premier convoyeur de levage et d'abaissement (16) de la part du convoyeur de chargement (8), sans passer par les convoyeurs de veille (15).

5. Installation de stockage d'articles (1) selon l'une quelconque des revendications 1 à 4, dans laquelle
(i) un des côtés de l'installation de stockage d'articles par rapport à la première direction (X) où chaque première tablette (13) est disposée par rapport à chaque deuxième tablette (14) étant un premier côté de la première direction (X), (ii) un des côtés de l'installation de stockage d'articles où chaque deuxième tablette (14) est disposée par rapport à chaque première tablette (13) étant un deuxième côté de la première direction (X),
la navette de transfert est configurée pour se déplacer dans la première direction (X) entre une extrémité sur le premier côté de la première direction (X) de la première tablette (13) et une extrémité sur le deuxième côté de la première direction (X) de la deuxième tablette (14) et elle est destinée à transférer les articles (22) entre les premières tablettes (13), le convoyeur de veille, et les deuxième tablettes (14).

6. Installation de stockage d'articles (1) selon l'une quelconque des revendications 1 à 5, dans laquelle
le premier mécanisme de levage et d'abaissement (17) comprend un premier mât (18) configuré pour guider le premier convoyeur de levage et d'abaissement (16) dans la direction haut-bas, le deuxième mécanisme de levage et d'abaissement (20) comprend un deuxième mât (21) configuré pour guider le deuxième convoyeur de levage et d'abaissement (19) dans la direction haut-bas, et
le premier mât (18) et le deuxième mât (21) sont disposés dans des positions qui ne coïncident pas avec les voies de déplacement des navettes de transfert (5) vu de dessus ou de dessous le long de la direction haut-bas.

7. Installation de stockage d'articles (1) selon l'une quelconque des revendications 1 à 6, dans laquelle
chaque convoyeur de veille (15) comprend des zones de chargement (23) où les articles (22) sont destinés à être chargés dans une rangée le long de la première direction (X) et est destiné à déplacer les articles chargés (22) le long de la première direction (X), et
au moins une zone de chargement des zones de chargement (23) est utilisée comme une position où la navette de transfert est destinée à transférer les articles (22) au convoyeur de veille (15), et au moins une autre zone de chargement des zones de chargement (23) est utilisée comme une position où la navette de transfert est destinée à recevoir les articles (22) de la part du convoyeur de veille (15).

8. Installation de stockage d'articles (1) selon l'une quelconque des revendications 1 à 6, dans laquelle
chaque convoyeur de veille (15) comprend des zones de chargement (23) où les articles (22) sont destinés à être chargés dans une rangée le long de la première direction (X) et à déplacer les articles chargés (22) vers un deuxième côté dans une direction de transport (X2), qui est un des côtés dans la direction de transport (X2) le long de la première direction (X),
les zones de chargement (23) sont dotées d'un butoir (11) configuré pour arrêter un mouvement des articles (22) par le convoyeur de veille (15) en contactant les articles (22) d'un deuxième côté dans la direction de transport (X2),
au moins une zone de chargement des zones de chargement (23) positionnée sur le deuxième côté dans la direction de transport (X2) du butoir (11) est utilisée comme une zone de chargement où la navette de transfert (5) est destinée à passer les articles (22) au convoyeur de veille (15), et
au moins une autre zone de chargement des zones de chargement (23) positionnée sur un premier côté dans la direction de transport (X2), qui est un côté opposé au deuxième côté dans la direction de transport (X2), du butoir (11) est utilisée comme une zone de chargement où la navette de transfert (5) est destinée à recevoir les articles (22) de la part du convoyeur de veille (15).

9. Installation de stockage d'articles (1) selon la revendication 8, dans laquelle le butoir (11) est configuré pour être apte à changer entre (i) une position de contact où un mouvement des articles (22) est arrêté en contactant les articles (22) et (ii) une position de non-contact où le butoir (11) est retracté de façon à ne pas contacter les articles (22).

10. Installation de stockage d'articles (1) selon l'une quelconque des revendications 1 à 9, dans laquelle
une direction perpendiculaire à la première direction (X) vu de dessus ou de dessous le long de la direction haut-bas étant une deuxième direction (Y),
le premier rayonnage multi-niveau (2), le deuxième rayonnage multi-niveau (3), la station de veille (4), le premier appareil de levage et d'abaissement (6), et le deuxième appareil de levage et d'abaissement (7) sont tous disposés par paire qui font face l'une à l'autre dans la deuxième direction (Y) avec les voies de déplacement des navettes de transfert (5) entre eux.

11. Installation de stockage d'articles (1) selon l'une quelconque des revendications 1 à 10,
comprenant des nombres égaux des convoyeurs de veille (15), des premières tablettes (13), et des deuxième tablettes (14).
